# FASCICULE DE BREVET EUROPEEN

(11) **EP 2 736 773 B1**
(45) Date de publication et mention de la délivrance du brevet: **25.04.2018**
(21) Numéro de dépôt: 12741308.6
(22) Date de dépôt: 24.07.2012
(51) Int. Cl.: B60R 25/02

(54) **DISPOSITIF ANTIVOL POUR UNE COLONNE DE DIRECTION DE VÉHICULE AUTOMOBILE**
ANTIDIEBSTAHLVORRICHTUNG FÜR EINE LENKSÄULE EINES KRAFTFAHRZEUGES
ANTI-THEFT DEVICE FOR THE STEERING COLUMN OF A MOTOR VEHICLE

(30) Priorité: 25.07.2011 FR 1102313
(43) Date de publication de la demande: 04.06.2014
(73) Titulaire: U-Shin France, 94000 Créteil (FR)
(72) Inventeur: PERRIN, Christophe, 58160 Imphy (FR)
(74) Mandataire: Gaillarde, Frédéric F. Ch.
(86) Numéro de dépôt international: PCT/EP2012/064550
(87) Numéro de publication internationale: WO 2013/014174

(56) Documents cités:
- EP-A1- 1 084 915
- EP-A1- 1 167 135
- EP-A2- 2 025 567
- WO-A1-2011/054673

## Description

La présente invention concerne un dispositif pour une colonne de direction de véhicule automobile.

Les dispositifs antivols pour une colonne de direction comportent typiquement des moyens de verrouillage comportant un pêne monté mobile dans un corps d'antivol, entre une position de déverrouillage dans laquelle il est destiné à être disposé à distance d'une colonne de direction, et une position de verrouillage dans laquelle il est destiné à bloquer ladite colonne. Le pêne est commandé en déplacement par l'intermédiaire d'un verrou rotatif intégré dans le corps d'antivol.

Dans certains cas, le verrou rotatif commandant le pêne se retrouve arraché par une personne malveillante voulant accéder au pêne et de le déverrouiller manuellement pour libérer la colonne de direction. Ce type d'effraction est dite « forte ».

Certains dispositifs proposent un moyen de supercondamnation apte à bloquer le pêne en position de verrouillage lorsque le verrou rotatif est arraché.

En particulier, il est connu du document WO 2013/014174, un dispositif antivol pour une colonne de direction pour véhicule automobile comprenant :
- un moyen de verrouillage comportant un pêne monté mobile entre une position de déverrouillage libérant une colonne de direction et une position de verrouillage de ladite colonne, ledit pêne étant associé à un moyen de retour élastique permettant audit pêne de revenir de la position de déverrouillage à la position de verrouillage,
- un moyen de supercondamnation comportant un organe de retenue et un élément de blocage configuré en position active pour bloquer le pêne en position de verrouillage, l'organe de retenue étant configuré pour retenir l'élément de blocage dans une position de repos ne bloquant pas le pêne en position de verrouillage.

Malgré les avantages que procure un tel dispositif, ce dernier nécessite un nombre important d'étapes de montage et est relativement fragile du fait que le travail de blocage est en cisaillement.

En outre, le verrouillage peut être réversible en appliquant un effort important sur la tige.

Un but de la présente invention est de proposer un dispositif antivol pour une colonne de direction de véhicule automobile qui soit fiable, efficace, plus simple à assembler et plus robuste.

En vue de la réalisation de ce but, on propose selon l'invention un dispositif du type précité dans lequel ledit élément de blocage est disposé entre le pêne et le moyen de retour élastique de sorte à être sollicité contre ledit pêne par le moyen de retour élastique , et l'élément de blocage comporte des moyens d'arrêt aptes à coopérer avec un élément fixe du dispositif antivol de sorte à bloquer en rotation l'élément de blocage en position active, ledit moyen de retour élastique étant comprimé en torsion et en compression en position de repos de sorte à donner à l'élément de blocage en position active un moment de rotation pour pivoter autour d'un axe colinéaire à l'axe de déplacement dudit élément de blocage afin de venir bloquer l'élément de blocage et le pêne.

En cas de tentative d'effraction forte, l'organe de retenue n'est plus en contact avec l'élément de blocage et libère ce dernier qui vient alors bloquer le pêne en position de verrouillage. Plus précisément, l'élément de blocage subit un déplacement longitudinal couplé à une rotation de la part du moyen de retour élastique. Le pivotement dudit élément bloque également l'élément de blocage. Deux déplacements successifs, rotatif puis translatif, inverses doivent être réalisés pour désengager le pêne de la colonne de direction.

Le pêne est donc durablement et efficacement bloqué en position de verrouillage.

En outre, l'élément de blocage étant disposé entre le moyen de rappel élastique et le pêne, ce dernier est difficilement accessible de l'extérieur et peut être difficilement manipulé par une personne malveillante.

Le dispositif de l'invention permet un blocage simple, fiable et robuste du pêne en cas d'infraction forte.

Ledit dispositif peut en outre comporter l'une ou plusieurs des caractéristiques suivantes, prises séparément ou en combinaison :
- les moyens d'arrêt comprennent des ailettes coopérant avec un renfoncement du logement du corps du dispositif antivol ;
- au moins une partie de l'élément de blocage comporte un chanfrein apte à entraîner le pêne selon deux directions sensiblement perpendiculaires ce qui permet de bloquer le pêne lorsque celui-ci n'est pas totalement en position de verrouillage;
- l'élément de blocage est un pion comportant une extrémité apte à coopérer avec une partie du pêne ce qui permet de manière simple d'assurer le blocage du pêne ;
- l'extrémité du pion coopère avec une partie du pêne par l'intermédiaire d'une partie saillante apte à venir par complémentarité de forme dans un logement correspondant du pêne ce qui permet une coopération fiable et efficace entre l'élément de blocage et le pêne ;
- l'organe de retenue est une plaque coopérant avec une partie de l'élément de blocage ce qui permet de maintenir de manière simple l'élément de blocage en position de repos ;
- le dispositif de l'invention comprend en outre un verrou rotatif destiné à mettre le pêne en position de verrouillage et de déverrouillage, l'organe de retenue étant fixé audit verrou ;
- le dispositif de l'invention comportant en outre des moyens de renfort disposés sensiblement le long de l'élément de blocage ce qui permet de rendre encore plus difficile d'accès à l'élément de blocage,
- les moyens de renfort comprennent des tiges réalisées dans un matériau ferromagnétique ce qui permet d'assurer une protection efficace contre un aimant.

Selon un autre aspect, l'invention a pour objet une colonne de direction pour véhicule automobile comprenant un dispositif antivol selon l'invention.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente schématiquement une vue en perspective de côté d'un mode de réalisation d'un dispositif antivol selon l'invention dans lequel le moyen de supercondamnation est en position active,
- la figure 2 est un agrandissement II de la figure 1 du dispositif antivol de l'invention avec le moyen de supercondamnation,
- la figure 3 est une vue de côté de la figure 2 plus élargie,
- la figure 4 est un schéma partiel du passage de la position de repos à la position active du moyen de supercondamnation du mode de réalisation de la figure 1,
- la figure 5 est une vue de dessous d'un autre mode de réalisation du dispositif antivol de l'invention dans lequel le moyen de supercondamnation est en position active,
- la figure 6 est une vue de l'extérieur du corps du mode de réalisation du dispositif antivol de la figure 5.

Dans ces figures, les éléments sensiblement identiques portent les mêmes références.

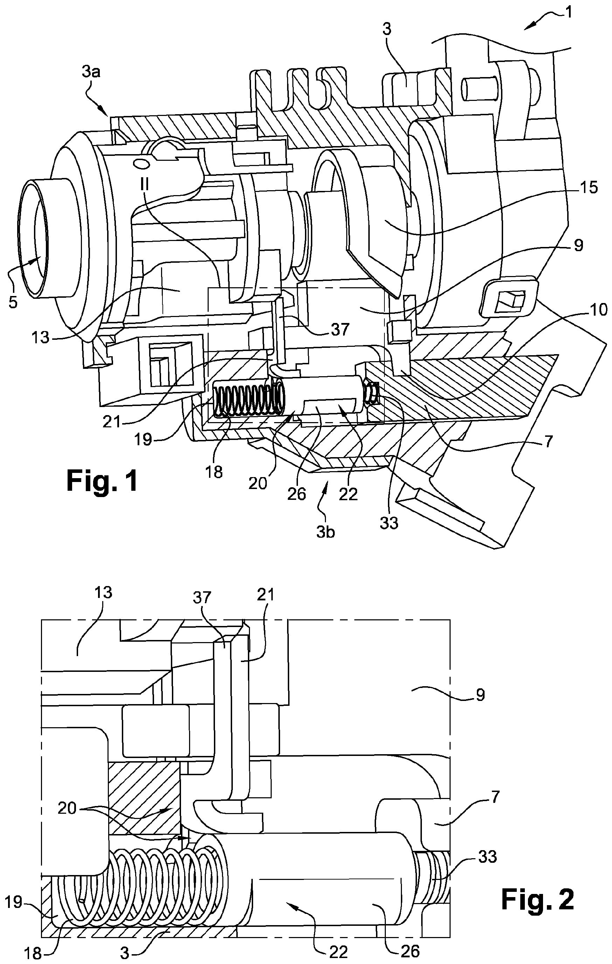

On a représenté sur la figure 1, un dispositif antivol pour véhicule automobile, selon l'invention, désigné par la référence générale 1. Ce dispositif antivol 1 est destiné à commander le démarrage d'un moteur du véhicule et le verrouillage d'une colonne de direction du véhicule (non représentée).

Le dispositif antivol 1 présente un corps d'antivol 3 sous la forme d'une coque de protection.

Ce corps d'antivol 3 comprend un verrou 5, un pêne 7 de verrouillage de la colonne de direction (non représentée), et un moyen d'entraînement 9 du pêne 7 de verrouillage. Le moyen d'entraînement 9 peut être une tirette apte à coopérer comme représenté sur la figure 1 avec une fente du pêne par l'intermédiaire d'une protubérance 10.

Dans l'exemple illustré sur la figure 1, le corps d'antivol 3 présente une première partie avant 3a logeant le verrou 5 et une deuxième partie arrière 3b logeant le pêne 7.

Les termes « avant » et « arrière » sont ici utilisés par rapport à l'accessibilité à un utilisateur. L'utilisateur a accès à la partie avant 3a du corps antivol 3 pour insérer sa clé de contact. La partie arrière 3b du corps d'antivol 3 est quant à elle à proximité de la colonne de direction.

Le verrou 5 comprend un rotor (non visible) monté rotatif dans un stator 13.

Selon le mode de réalisation illustré, le verrou 5 présente en outre une came 15 solidarisée au rotor, par exemple agencée à l'extrémité arrière du rotor.

La came 15 présente un corps de forme générale cylindrique coaxiale au rotor.

Le rotor entraîne donc en rotation cette came 15.

Le verrou 5 est mobile entre une position verrouillage et au moins une position de fonctionnement.

Lorsque l'utilisateur tourne la clé de contact dans le rotor, le verrou 5 est en position de fonctionnement de façon à commander par exemple les accessoires du véhicule ou le démarrage. On peut prévoir des positions angulaires différentes du rotor pour la commande des accessoires et du démarrage.

En position verrouillage, la clé n'est pas introduite dans le rotor ou la clé est insérée mais n'est pas tournée vers une des positions angulaires de fonctionnement.

Le pêne 7 est monté coulissant dans le corps d'antivol 3. À cet effet, le corps d'antivol 3 peut former au niveau de sa partie arrière 3b un guide pêne pour le coulissement du pêne 7.

Le pêne 7 est mobile entre une position de verrouillage de la colonne de direction (non représentée) et une position de libération de cette colonne.

Dans les modes de réalisation représenté sur les figures, le pêne 7 est en position de verrouillage.

Plus précisément, dans la position de verrouillage, le pêne 7 engage de manière classique une partie de la colonne de direction (non représentée) pour la bloquer en rotation. Dans cette position de verrouillage, le pêne 7 fait généralement saillie par rapport au corps d'antivol 3.

Par contre en position de libération, le pêne 7 est escamoté à l'intérieur du corps d'antivol 3 pour libérer la colonne.

Le pêne 7 est associé à un moyen de retour élastique 18, ici sous la forme d'un ressort. Le moyen de retour élastique 18 permet de mettre sous tension le pêne de sorte que ce dernier passe de sa position de déverrouillage à sa position de verrouillage.

Le moyen de retour élastique 18 est reçu dans un logement 19 du corps 3 du dispositif antivol de l'invention.

Comme représenté sur la figure 1 et plus particulièrement sur les figures 2 à 4, le dispositif de l'invention 1 comprend également un moyen de supercondamnation 20.

Le moyen de supercondamnation 20 comporte un organe de retenu 21 et un élément de blocage 22 configuré pour venir en position active dans laquelle le pêne 7 est bloqué en position de verrouillage. L'organe de retenu 21 est configuré pour retenir l'élément de blocage 22 dans une position de repos ne bloquant pas le pêne 7 en position de verrouillage.

L'élément de blocage est disposé entre le pêne et le moyen de retour élastique de sorte à être sollicité contre ledit pêne 7 par le moyen de retour élastique 18.

Le moyen de blocage est typiquement en contact permanent avec le pêne 7 de sorte à entraîner ce dernier.

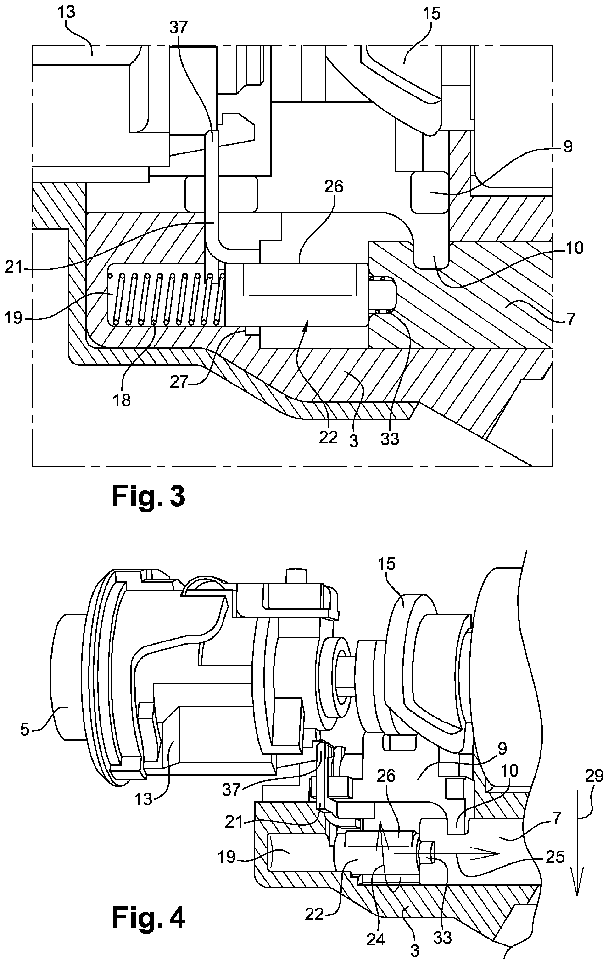

Lorsque l'élément de blocage 22 est en position de repos, à savoir non engagé pour bloquer le pêne 7, le moyen de retour élastique 18, ici le ressort, est mis en compression et en torsion. Ceci permet de donner à l'élément de blocage 22 en position active un moment de rotation 24 pour pivoter autour d'un axe colinéaire à l'axe de déplacement 25 dudit élément de blocage (voir figure 3). L'élément de blocage 22 et le pêne 7 sont alors bloqués.

En cas de tentative d'effraction forte, l'organe de retenue 21 n'est plus en contact avec l'élément de blocage 22 et libère ce dernier qui vient alors bloquer le pêne 7. Plus précisément, l'élément de blocage 22 subit un déplacement longitudinal couplé à une rotation de la part du moyen de retour élastique 18. Une fois, que l'élément de blocage 22 est en contact avec le pêne 7, le pivotement dudit élément 22 bloque également l'élément de blocage 22. Deux déplacements successifs, rotatif puis translatif, inverses doivent être réalisés pour désengager le pêne 7.

Le pêne 7 est donc durablement et efficacement bloqué en position de verrouillage.

En outre, l'élément de blocage 22 étant disposé entre le moyen de rappel élastique 18 et le pêne 7, ce dernier est difficilement accessible de l'extérieur et peut être difficilement manipulé par une personne malveillante.

Le dispositif de l'invention 1 permet un blocage simple, fiable et robuste du pêne 7 en cas d'infraction forte.

L'élément de blocage 22 peut être un pion, comme représenté sur les figures. L'élément de blocage 22 peut comporter des moyens d'arrêt, tels qu'une ou plusieurs des ailettes 26, apte à coopérer avec un élément fixe du dispositif antivol 1 de l'invention de sorte à bloquer durablement l'élément de blocage 22 en position active. Ainsi, on obtient un blocage simple, efficace et robuste du pêne 7.

Selon le mode de réalisation représenté sur les figures, l'élément fixe est ici un renfoncement 27 du logement 19 recevant le moyen de retour élastique 18.

L'élément fixe peut être également une pièce rapportée fixe par rapport à l'élément de blocage 22.

Les ailettes 26 sont disposées radialement sur la surface extérieure de l'élément de blocage 22.

L'élément de blocage 22 comporte une extrémité libre 33 apte à coopérer avec une partie 34 du pêne dans un contact permanent ce qui permet de manière simple d'assurer le blocage du pêne 7. Dans le mode de réalisation des figures, le pion comporte une tête apte à venir bloquer le pion dans le pêne 7.

L'extrémité du pion peut ainsi coopérer avec une partie du pêne par l'intermédiaire d'une partie saillante apte à venir par complémentarité de forme dans un logement correspondant du pêne ce qui permet une coopération fiable et efficace entre l'élément de blocage et le pêne. La tête ou l'extrémité libre saillante peut avoir toute forme adaptée pour venir coopérer et bloquer le pêne 7.

L'organe de retenu 21 peut être une plaque coopérant avec une partie de l'élément de blocage 22 ce qui permet de maintenir de manière simple l'élément de blocage en position de repos. Selon le mode de réalisation représenté sur les figures, l'organe de retenu 21 est configurée pour coopérer avec les moyens d'arrêt, une ailette 26, de l'élément de blocage.

La plaque 21 peut présenter toute forme. Ladite plaque 21 peut par exemple présenter un évidement au travers duquel le moyen d'entraînement 9 du pêne de la position de déverrouillage à la position de déverrouillage peut traverser. Ceci permet d'obtenir un dispositif antivol encore plus compact.

La plaque 21 présente ainsi une partie 37 apte à coopérer avec le verrou rotatif 5 destiné à mettre le pêne 7 en position de verrouillage et de déverrouillage. L'organe de retenu 21 peut être fixé audit verrou 5.

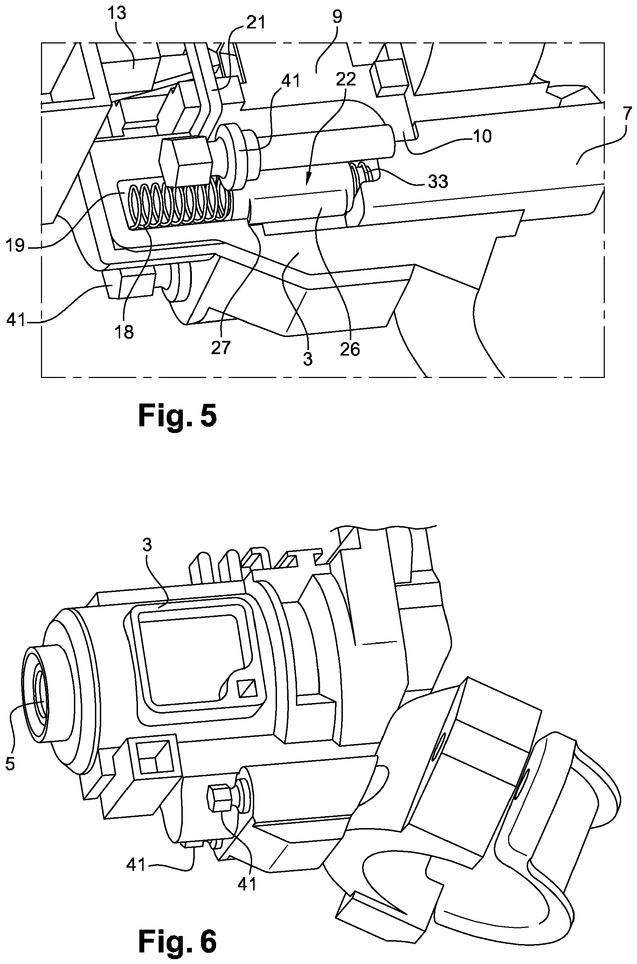

Comme représenté sur les figures 5 et 6, le dispositif de l'invention 1 peut également comporter des moyens de renfort 41 disposés sensiblement le long de l'élément de blocage 22 ce qui permet de rendre encore plus difficile l'accès à l'élément de blocage 22.

Les moyens de renfort 41 peuvent comprendre des tiges réalisées dans un matériau ferromagnétique ce qui permet d'assurer une protection efficace contre toute attaque par un aimant.

En effet, le matériau dans lequel les moyens de renfort sont réalisés est difficile à découper.

Les moyens de renfort 41 peuvent être par exemple des vis ou des boulons.

Le dispositif de l'invention 1 peut comporter un ou plusieurs moyens de renfort 41 répartis sur la surface externe de l'élément de blocage 22.

Les moyens de renforts 41 peuvent être logés dans des logements prévus dans la coque de protection du corps 3 du dispositif de l'invention.

## Revendications

1. Dispositif antivol (1) pour une colonne de direction pour véhicule automobile comprenant :
- un moyen de verrouillage comportant un pêne (7) monté mobile entre une position de déverrouillage libérant une colonne de direction et une position de verrouillage de ladite colonne, ledit pêne (7) étant associé à un moyen de retour élastique (18) permettant audit pêne (7) de revenir de la position de déverrouillage à la position de verrouillage,
- un moyen de supercondamnation (20) comportant un organe de retenue (21) et un élément de blocage (22) configuré en position active pour bloquer le pêne (7) en position de verrouillage, l'organe de retenue (21) étant configuré pour retenir l'élément de blocage (22) dans une position de repos ne bloquant pas le pêne (7) en position de verrouillage,
**caractérisé en ce que** ledit élément de blocage (22) est disposé entre le pêne (7) et le moyen de retour élastique (18) de sorte à être sollicité contre ledit pêne (7) par le moyen de retour élastique (18), et l'élément de blocage (22) comporte des moyens d'arrêt (26) aptes à coopérer avec un élément fixe (27) du dispositif antivol (1) de sorte à bloquer en rotation l'élément de blocage (22) en position active, ledit moyen de retour élastique (18) étant comprimé en torsion et en compression en position de repos de sorte à donner à l'élément de blocage (22) en position active un moment de rotation pour pivoter autour d'un axe colinéaire à l'axe de déplacement (25) dudit élément de blocage (22) afin de venir bloquer l'élément de blocage (22) et le pêne (7).

2. Dispositif (1) selon la revendication 1, dans lequel les moyens d'arrêt comprennent des ailettes (26) coopérant avec un renfoncement (27) du logement (19) du corps (3) du dispositif antivol (1).

3. Dispositif (1) selon l'une quelconque des revendications précédentes, dans lequel l'élément de blocage (22) est un pion comportant une extrémité (33) apte à coopérer avec une partie du pêne (7).

4. Dispositif (1) selon la revendication précédente, dans lequel l'extrémité (33) coopère avec une partie du pêne (7) par l'intermédiaire d'une partie saillante apte à venir par complémentarité de forme dans un logement correspondant du pêne (7).

5. Dispositif (1) selon l'une quelconque des revendications précédentes, dans lequel l'organe de retenue (21) est une plaque coopérant avec une partie (26) de l'élément de blocage (22).

6. Dispositif (1) selon l'une quelconque des revendications précédentes, comprenant en outre un verrou rotatif (5) destiné à mettre le pêne (7) en position de verrouillage et de déverrouillage, l'organe de retenue (21) étant fixé audit verrou (5).

7. Dispositif (1) selon l'une quelconque des revendications précédentes, comportant en outre des moyens de renfort (41) disposés sensiblement le long de l'élément de blocage (22).

8. Dispositif (1) selon la revendication précédente, dans lequel les moyens de renfort (41) comprennent des tiges réalisées dans un matériau ferromagnétique.

9. Colonne de direction pour véhicule automobile comprenant un dispositif antivol (1) selon l'une quelconque des revendications précédentes.

## Patentansprüche

1. Diebstahlschutzvorrichtung (1) für eine Kraftfahrzeuglenksäule, umfassend:
- ein Verriegelungsmittel, das einen Riegel (7) umfasst, der zwischen einer Entriegelungsstellung, die eine Lenksäule freigibt, und einer Verriegelungsstellung der Säule beweglich montiert ist, wobei der Riegel (7) mit einem elastischen Rückstellmittel (18) verbunden ist, das es dem Riegel (7) ermöglicht, aus der Entriegelungsstellung in die Verriegelungsstellung zurückzukehren,
- ein Superverriegelungsmittel (20), das ein Rückhalteglied (21) und ein Sperrelement (22) umfasst, das dafür ausgebildet ist, in aktiver Stellung den Riegel (7) in Verriegelungsstellung zu sperren, wobei das Rückhalteglied (21) dafür ausgebildet ist, das Sperrelement (22) in einer Ruhestellung zurückzuhalten, die den Riegel (7) nicht in Verriegelungsstellung sperrt,
**dadurch gekennzeichnet, dass** das Sperrelement (22) so zwischen dem Riegel (7) und dem elastischen Rückstellmittel (18) angeordnet ist, dass es von dem elastischen Rückstellmittel (18) gegen den Riegel (7) vorgespannt wird, und das Sperrelement (22) Anschlagmittel (26) umfasst, die in der Lage sind, so mit einem festen Element (27) der Diebstahlschutzvorrichtung (1) zusammenzuwirken, dass das Sperrelement (22) in aktiver Stellung drehgesperrt ist, wobei das elastische Rückstellmittel (18) in Ruhestellung so torsions- und kompressionskomprimiert ist, dass dem Sperrelement (22) in aktiver Stellung ein Drehmoment verliehen wird, um um eine zur Bewegungsachse (25) des Sperrelements (22) kollineare Achse zu schwenken, um das Sperrelement (22) und den Riegel (7) zu sperren.

2. Vorrichtung (1) nach Anspruch 1, wobei die Anschlagmittel Stege (26) umfassen, die mit einer Verstärkung (27) der Aufnahme (19) des Gehäuses (3) der Diebstahlschutzvorrichtung (1) zusammenwirken.

3. Vorrichtung (1) nach einem der vorstehenden Ansprüche, wobei das Sperrelement (22) ein Stift ist, der ein Ende (33) umfasst, welches in der Lage ist, mit einem Abschnitt des Riegels (7) zusammenzuwirken.

4. Vorrichtung (1) nach dem vorstehenden Anspruch, wobei das Ende (33) mittels eines vorstehenden Abschnitts, der durch Formschluss in der Lage ist, in eine entsprechende Aufnahme des Riegels (7) zu gehen, mit einem Abschnitt des Riegels (7) zusammenwirkt.

5. Vorrichtung (1) nach einem der vorstehenden Ansprüche, wobei das Rückhalteglied (21) eine Platte ist, die mit einem Abschnitt (26) des Sperrelements (22) zusammenwirkt.

6. Vorrichtung (1) nach einem der vorstehenden Ansprüche, weiter ein Drehschloss (5) umfassend, das dazu bestimmt ist, den Riegel (7) in Verriegelungs- und Entriegelungsstellung zu bringen, wobei das Rückhalteglied (21) am Schloss (5) befestigt ist.

7. Vorrichtung (1) nach einem der vorstehenden Ansprüche, weiter Verstärkungsmittel (41) umfassend, die im Wesentlichen entlang des Sperrelements (22) angeordnet sind.

8. Vorrichtung (1) nach dem vorstehenden Anspruch, wobei die Verstärkungsmittel (41) Stangen umfassen, die aus einem ferromagnetischen Material ausgeführt sind.

9. Kraftfahrzeuglenksäule, die eine Diebstahlschutzvorrichtung (1) nach einem der vorstehenden Ansprüche umfasst.

## Claims

1. An anti-theft device (1) for a steering column of a motor vehicle comprising:
- a locking means including a bolt (7) movably mounted between an unlocking position releasing a steering column and a locking position of said column, said bolt (7) being associated with an elastic return means (18) allowing said bolt (7) to return from the unlocking position to the locking position,
- super-lockout means (20) including a retaining member (21) and a blocking element (22) configured in the active position to block the bolt (7) in the locking position, the retaining member (21) being configured to retain the blocking element (22) in a rest position that does not block the bolt (7) in the locking position,
**characterized in that** said blocking element (22) is disposed between the bolt (7) and the elastic return means (18) so as to be biased against said bolt (7) by the elastic return means (18), and the blocking element (22) includes stop means (26) able to cooperate with a fixed element (27) of the anti-theft device (1) so as to block in rotation the blocking element (22) in the active position, said elastic return means (18) being compressed in torsion and in compression in the rest position so as to give the blocking element (22) in the active position a rotational moment in order to pivot about an axis collinear to the axis of movement (25) of said blocking element (22) in order to block the blocking element (22) and the bolt (7).

2. The anti-theft device (1) according to claim 1, wherein the stop means comprise fins (26) cooperating with a recess (27) of the housing (19) of the body (3) of the antitheft device (1).

3. The anti-theft device (1) according to any one of the preceding claims, wherein the blocking element (22) is a pin including an end (33) able to cooperate with part of the bolt (7).

4. The anti-theft device (1) according to the preceding claim, wherein the end (33) cooperates with part of the bolt (7) via a protruding part able to fit, by shape complementarity, in a corresponding housing of the bolt (7).

5. The anti-theft device (1) according to any one of the preceding claims, wherein the retaining member (21) is a plate cooperating with part (26) of the blocking element (22).

6. The anti-theft device (1) according to any one of the preceding claims, further comprising a rotary lock (5) intended to put the bolt (7) in the locking and unlocking position, the retaining member (21) being fastened to said lock (5).

7. The anti-theft device (1) according to any one of the preceding claims, further including reinforcing means (41) disposed substantially along the blocking element (22).

8. The anti-theft device (1) according to the preceding claim, wherein the reinforcing means (41) comprise rods made of a ferromagnetic material.

9. A steering column for a motor vehicle comprising an anti-theft device (1) according to any one of the preceding claims.
